# EUROPEAN PATENT SPECIFICATION

(11) **EP 2 701 365 B1**
(45) Date of publication and mention of the grant of the patent: **01.10.2025**
(21) Application number: 12774618.8
(22) Date of filing: 07.02.2012
(51) Int. Cl.: H04W 4/02

(54) **METHOD AND SYSTEM FOR DISPLAYING USER ACTIVITIES BASED ON GEOGRAPHICAL LOCATION INFORMATION, AND COMPUTER STORAGE MEDIUM**
VERFAHREN UND SYSTEM ZUR ANZEIGE VON BENUTZERAKTIVITÄTEN AUF BASIS GEOGRAPHISCHER STANDORTINFORMATIONEN UND COMPUTERSPEICHERMEDIUM
PROCÉDÉ ET SYSTÈME D'AFFICHAGE D'ACTIVITÉS D'UTILISATEUR SUR LA BASE D'INFORMATIONS DE GÉOLOCALISATION, ET SUPPORT DE STOCKAGE INFORMATIQUE

(30) Priority: 22.04.2011 CN 201110101858
(43) Date of publication of application: 26.02.2014
(73) Proprietor: Tencent Technology (Shenzhen) Company Limited, Shenzhen, Guangdong, 518057 (CN)
(72) Inventor: LIU, Desheng, Shenzhen Guangdong 518044 (CN); LIN, Qiang, Shenzhen Guangdong 518044 (CN)
(74) Representative: Novagraaf International SA
(86) International application number: PCT/CN2012/070916
(87) International publication number: WO 2012/142865

(56) References cited:
- CN-A- 101 645 926
- CN-A- 101 997 917
- US-A1- 2008 070 593
- US-A1- 2008 209 011
- US-A1- 2008 209 011
- US-A1- 2009 152 349
- US-A1- 2009 233 629

## Description

### TECHNICAL FIELD

The present disclosure relates to Internet application technology, and more particularly, to a method and system for displaying user activities based on geographic location information, as well as a computer storage medium therefor.

### BACKGROUND

Along with development of the network technology, Internet applications are getting more popular; and users often publish information in SNS community network through a mobile communication terminal, and share the information with friends in the community. Herein, the SNS (Social Networking Service(s)) is an Internet application service for helping people build social networks.

After a user has published a piece of information in the SNS community network, his/her friends usually cannot see where the information was published, which results in inconvenience to them.

US 2009/233629 discloses a mobile social network for facilitating GPS based services, in which a user of the mobile social networking server selects one or more of his friends, based on their current locations, from one of a plurality of friend lists supported, to communicate collectively and share information collectively, for example, the user can select one or more friends and access their blogs and review their data.

### SUMMARY

The invention is defined by the claims.

In this case, there is a need to provide a method for displaying user activities based on geographic location information, to facilitate users in checking personal activities of their friends at different locations.

There is provided a method for displaying user activities based on geographic location information as claimed in claim 1:

Preferably, the step of obtaining, by a SNS server, geographic location information of the first SNS user who submits the personal activity information is : obtaining geographic coordinate information of a mobile communication terminal through which the personal activity information is submitted; and obtaining the geographic location information of the first SNS user who submits the personal activity information based on the geographic coordinate information and a geographic information system.

Preferably, the step of obtaining the geographic location information of the first SNS user who submits the personal activity information based on the geographic coordinate information and a geographic information system is : matching the geographic coordinate information of the mobile communication terminal with geographic coordinates stored in the geographic information system, to obtain a geographic location corresponding to the geographic coordinate information of the mobile communication terminal.

Preferably, the method further includes steps of: setting a link address of the personal activity information of the first SNS user; and displaying the link address in the friend activity list of the second SNS user.

In addition, there is also a need to provide a system for displaying user activities based on geographic location information, to facilitate a user in checking personal activities of friends at different locations.

There is provided a system for displaying user activities based on geographic location information as claimed in claim 5.

Preferably, the information obtaining module is further configured to obtain geographic coordinate information of a mobile communication terminal through which the personal activity information is submitted, to obtain the geographic location information of the first SNS user who submits the personal activity information based on the geographic coordinate information and a geographic information system.

Preferably, the information obtaining module is further configured to match the geographic coordinate information of the mobile communication terminal with geographic coordinates stored in the geographic information system, to obtain a geographic location corresponding to the geographic coordinate information of the mobile communication terminal.

Preferably, the system further includes a setting module connected to the displaying module, configured to set a link address of the personal activity information of the first SNS user; and the displaying module is further configured to display the link address in the friend activity list of the second SNS user.

Furthermore, there is still a need to provide a computer storage medium to facilitate a user in checking personal activities of friends at different locations.

There is provided one or more non-transitory computer storage mediums containing computer executable instructions for executing a method for displaying user activities based on geographic location information as claimed in claim 9.

In the above-mentioned method and system for displaying user activities based on geographic location information, as well as a computer storage medium therefor, upon obtaining the personal activity information submitted by the first SNS user, the geographic location information of the first SNS user who submits the personal activity information is obtained at the same time, and the personal activity information, the geographic location information and the first SNS user identification number of the first SNS user are displayed in the friend activity list of the second SNS user, in order for the second SNS user to check personal activities of friends at different locations.

### BRIEF DESCRIPTION OF THE DRAWINGS

FIG. 1 is a flow chart of a method for displaying user activities based on geographic location information in one embodiment;
FIG. 2 is a flow chart of a method for obtaining the geographic location information of the user who submits the information as shown in FIG. 1;
FIG. 3 is a schematic diagram of the internal structure of a system for displaying user activities based on geographic location information in one embodiment; and
FIG. 4 is a schematic diagram of the internal structure of a system for displaying user activities based on geographic location information in another embodiment.

### DETAILED DESCRIPTION

Detailed description would be made hereinafter in conjunction with the specific embodiments and accompanying drawings.

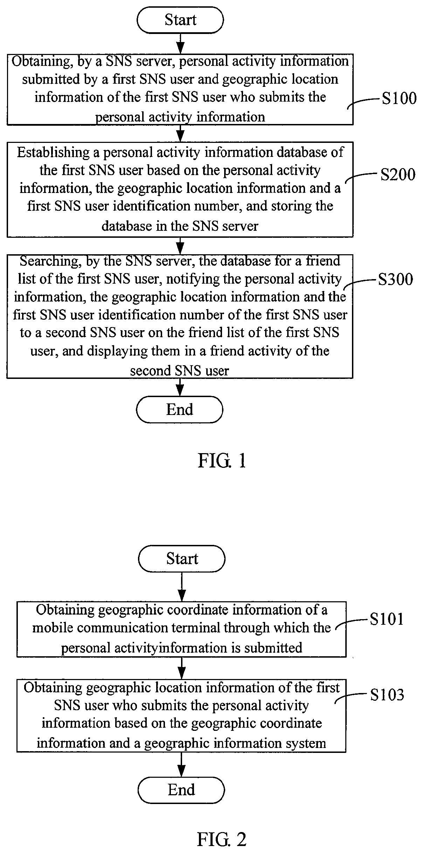

As shown in FIG. 1, in one embodiment, a method for displaying user activities based on geographic location information, comprises:
step S100: obtaining, by a SNS server, personal activity information submitted by a first SNS user and geographic location information of the first SNS user who submits the personal activity information.

When the first SNS (Social Networking Services) user submits the personal activity information to the SNS server through a mobile communication terminal, the geographic location information of the mobile communication terminal is also submitted at the same time, that is, the geographic location information of the first SNS user who submits the personal activity information, for example, personal activity information for Universiade Outlook which the first SNS user submitted at Shenzhen through a mobile communication terminal (e.g., a mobile phone). The personal activity information may refer to information published by a user, including but not limited to blogs, micro-blogs, uploaded pictures, comment contents, reply contents, shared contents, participated voting, played games, or updates of the SNS user's personal profile published by a SNS user. The updates of the SNS user's personal profile may include a change of a user nickname, or a replacement of a user icon, etc.

In one embodiment, as shown in FIG. 2, the step of obtaining, by a SNS server, the personal activity information submitted by a first SNS user and the geographic location information of the first SNS user who submits the personal activity information is :
step S101: obtaining geographic coordinate information of a mobile communication terminal, through which the personal activity information is submitted .

With external positioning mechanisms, such as GPS (Global Positioning System), or through radio communications networks of the telecommunication or mobile operators, such as GSM (Global System for Mobile Communications) network, and CDMA (Code Division Multiple Access) network, the geographic coordinate information of the mobile communication terminal is obtained.

In step S103, the geographic location information of the first SNS user who submits the personal activity information based on the geographic coordinate information and a geographic information system is obtained.

After the geographic coordinate information of the mobile communication terminal is obtained, in combination with GIS (Geographic Information System), a geographic location of the mobile communication terminal, i.e., the geographic location information of the first SNS user who submits the personal activity information, can be determined. The GIS system stores a corresponding relationship between the geographic coordinate information and the geographic location information. The specific step of determining the geographic location information of the mobile communication terminal is: matching the geographic coordinate information of the mobile communication terminal with geographic coordinates stored in the geographic information system, to obtain a geographic location corresponding to the geographic coordinate information of the mobile communication terminal. For example, if the obtained geographic coordinate information of the mobile communication terminal is "north latitude 39.9°, east longitude 116.3°", after searching for a match in the GIS system according to the latitude and the longitude, it can be determined that the geographic location is "Beijing District".

In step S200, a personal activity information database of the first SNS user based on the personal activity information, the geographic location information and a first SNS user identification number is established, and stored in the SNS server.

After the SNS server obtains the personal activity information submitted by the first SNS user through the mobile communication terminal and the geographic location information, it is necessary to establish a corresponding relationship among the personal activity information of the first SNS user, the geographic location information of the first SNS user who submits the personal activity information and the first SNS user identification number (shortly referred to as ID), that is, to establish a personal activity information database of the first SNS user, and store the database in the SNS server, facilitating the searching. As shown in Table 1, in the personal activity information database of a SNS user A, the SNS user A submits personal activity information 1 at a geographic location *a*, personal activity information 2 at a geographic location b, and personal activity information 3 at a geographic location c. In particular, for example, if the SNS user A's ID is 12345, the submitted personal activity information is "watching the Asian Games", and the geographic location information is "Guangzhou", then the personal activity information database of the SNS user A records a piece of data of "the SNS user A submitted 'watching the Asian Games' at Guangzhou".

**Table 1**

| | | |
|---|---|---|
| SNS User A's ID | Personal Activity Information 1 | Geographic Location a |
| SNS User A's ID | Personal Activity Information 2 | Geographic Location b |
| SNS User A's ID | Personal Activity Information 3 | Geographic Location c |

In addition, upon the SNS user A submits the new personal activity information n at the geographic location c, the SNS user A's ID, the personal activity information n and the geographic location c are updated into the personal activity information database of the SNS user A, as shown in Table 2.

**Table 2**

| | | |
|---|---|---|
| SNS User A's ID | Personal activity Information 1 | Geographic Location a |
| SNS User A's ID | Personal activity Information 2 | Geographic Location b |
| SNS User A's ID | Personal activity Information 3 | Geographic Location c |
| SNS User A's ID | Personal activity Information n | Geographic Location c |

In step S300, the database is searched for a friend list of the first SNS user by the SNS server, and the first SNS user's personal activity information, the geographic location information and the first SNS user identification number are notified to a second SNS user on the friend list of the first SNS user, and displayed in a friend activity list of the second SNS user.

The database stores friend lists of respective SNS users. The SNS server searches the database for a friend list of a first SNS user, the friend list of the first SNS user has at least one friend, who is the second SNS user, and notifies, to the second SNS user, the first SNS user ID, the submitted personal activity information and the geographic location information of the first SNS user who submits the personal activity information, and displays them in a friend activity list of the second SNS user, for the second SNS user to check. If the friend list of the SNS user A in the database in the SNS server contains a SNS user B and a SNS user X, and Xiangshan travel notes submitted by the SNS user A at Beijing, including specifically the personal activity information submitted by the SNS user A as the detailed contents of the travel notes, the geographic location as Beijing, and the SNS user A's ID as "1234", are displayed in friend activity lists of the SNS user B and the SNS user X who are both friends of the SNS user A.

In one embodiment, the above method for displaying user activities based on geographic location information further includes: setting a link address of the personal activity information of the first SNS user; and displaying the link address in the friend activity list of the second SNS user. The personal activity information submitted for the SNS user A can be a title and a link address in the friend activity lists of the SNS user B and the SNS user X, and if it is determined that the SNS user B and the SNS user X trigger the address, the detailed content of the personal activity information is pulled from the personal activity database of the SNS user A in the SNS server to be checked.

Table 3 is detailed records of friend activity list of the SNS user X who is a friend of the SNS user A.

**Table 3**

| | | |
|---|---|---|
| SNS User E | Personal Activity Information 1 | Geographic Location x |
| SNS User B | Personal Activity Information 2 | Geographic Location b |
| SNS User N | Personal Activity Information 3 | Geographic Location x |
| SNS User N | Personal Activity Information 4 | Geographic Location b |
| ... | ... | ... |
| SNS User A | Personal Activity Information n | Geographic Location b |

In Table 3, the friends of the SNS user X include the SNS user A, the SNS user B, the SNS user E, and the SNS user N, etc. The SNS user E submits the personal activity information 1 at the geographic location x, the user B submits the information 2 at the geographic location b, the user N submits the information 4 at the geographic location b, and the user A submits the information n at the geographic location b.

In a preferred embodiment, the above method for displaying user activities based on geographic location information further includes: obtaining, by the SNS server, the geographic location information of the displayed friend activity list, which is selected by the second SNS user; based on the geographic location information, screening the friend activity list of the second SNS user for respective friends' personal activity information corresponding to the geographic location information; and listing and displaying user identification numbers of the respective friends of the second SNS user and the respective personal activity information thereof in accordance with the geographic location information.

After the second SNS user selects geographic location information from the friend activity list, respective friends' personal activity information corresponding to the geographic location information can be picked up from the friend activity list of the second SNS user. For example, in the above embodiment, if the second SNS user is the SNS user X, the ID of a friend, who submits the personal activity information at geographic location b, in the friend activity list of the SNS user X, and the personal activity information thereof are shown in Table 4.

**Table 4**

| | | |
|---|---|---|
| SNS User B | Personal Activity Information 2 | Geographic Location b |
| SNS User N | Personal Activity Information 4 | Geographic Location b |
| SNS User A | Personal Activity Information n | Geographic Location b |

In Table 4, the SNS user X's friends who submit information at the geographic location b include the SNS user A, the SNS user B, and the SNS user N.

In addition, the first SNS user and the second SNS user are friends of each other, the personal activity information of the first SNS user would be displayed in the friend activity list of the second SNS user, while the personal activity information of the second SNS user would also be displayed in the friend activity list of the first SNS user. Therefore, the above-described operations on the first SNS user and the second SNS user are interchangeable.

Furthermore, the present invention further provides one or more computer storage mediums containing computer executable instructions for executing a method for displaying user activities based on geographic location information, and the specific steps thereof are as described in the above method, which would not be redundantly described herein.

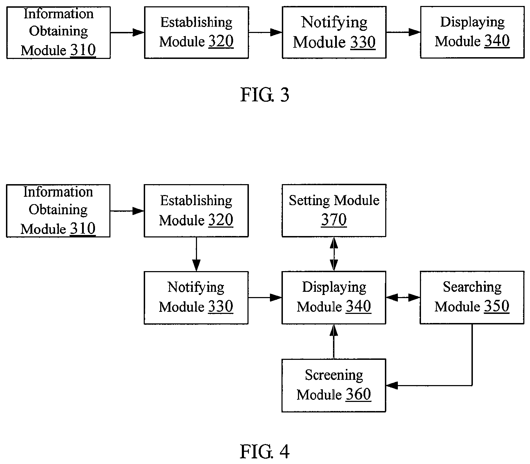

As shown in FIG. 3, in one embodiment, a system for displaying user activities based on geographic location information includes an information obtaining module 310, an establishing module 320, a notifying module 330 and a displaying module 340.

The information obtaining module 310 is configured to obtain personal activity information submitted by a first SNS user and geographic location information of the first SNS user who submits the personal activity information. When the first SNS (Social Networking Services) user submits the personal activity information to the SNS server through a mobile communication terminal, he/she also submits the geographic location information of the mobile communication terminal at the same time, that is, submits the geographic location information of the first SNS user who submits the personal activity information. The information obtaining module 310 obtains the personal activity information and the geographic location information of the first SNS user who submits the personal activity information, for example, personal activity information for Universiade Outlook which the first SNS user submitted at Shenzhen through a mobile communication terminal (e.g., a mobile phone). The personal activity information may refer to personal daily records published by a SNS user, uploaded pictures, or updates of the SNS user's personal profile, etc. The updates of the SNS user's personal profile may include a change of user nickname, or a replacement of user icon, etc.

The information obtaining module 310 is further configured to obtain geographic coordinate information of a mobile communication terminal through which the personal activity information is submitted, to obtain the geographic location information of the first SNS user who submits the personal activity information based on the geographic coordinate information and a geographic information system. With external positioning methods, such as GPS (Global Positioning System), or through radio communications networks of the telecommunications and mobile operators, such as GSM (Global System for Mobile Communications) network, CDMA (Code Division Multiple Access) network, etc., the geographic coordinate information of the mobile communication terminal is obtained. After the information obtaining module 310 obtains the geographic coordinate information, in combination with GIS (Geographic Information System), a geographic location of the mobile communication terminal, i.e., the geographic location information of the first SNS user who submits the personal activity information, can be determined. The GIS system stores a corresponding relationship between the geographic coordinate information and the geographic location information. The information obtaining module 310 matches the geographic coordinate information of the mobile communication terminal with geographic coordinates stored in the geographic information system, to obtain a geographic location corresponding to the geographic coordinate information of the mobile communication terminal. For example, if the obtained geographic coordinate information of the mobile communication terminal is "north latitude 39.9°, east longitude 116.3°", after searching for a match in the GIS according to the latitude and the longitude, it can be determined that the geographic location is "Beijing District".

The establishing module 320 is configured to establish a personal activity information database of the first SNS user based on the personal activity information, the geographic location information and a first SNS user ID. After the information obtaining module 310 obtains the personal activity information submitted by the first SNS user through the mobile communication terminal and the geographic location information, it is necessary that the establishing module 320 establish a corresponding relationship among the personal activity information of the first SNS user, the geographic location information of the first SNS user who submits the personal activity information and the first SNS user ID, that is, to establish a personal activity information database of the first SNS user, and store the database in the SNS server, facilitating the searching. As shown in Table 1, in the personal activity information database of the SNS user A, the SNS user A submits the personal activity information 1 at the geographic location *a*, the personal activity information 2 at the geographic location b, and the personal activity information 3 at the geographic location c. Specifically, for example, if the SNS user A's ID is 12345, the submitted personal activity information is "watching the Asian Games", and the geographic location information is "Guangzhou", the establishing module 320 establishes a personal activity information database of the SNS user A, and then the personal activity information database would record a piece of data of "the SNS user A submitted 'watching the Asian Games' at Guangzhou". In addition, when the SNS user A submits new the personal activity information n at the geographic location c, the establishing module 320 updates the SNS user A's ID, the information n and the geographic location c and stores them in the personal activity information database of the SNS user A, as shown in FIG. 2.

The notifying module 330 is configured to search the database for a friend list of the first SNS user, notify the personal activity information, the geographic location information and the first SNS user identification number of the first SNS user to a second SNS user on the friend list of the first SNS user. The database in the SNS server is searched for the friend list of the first SNS user, and the friend list of the first SNS user contains at least one friend, who is/are the second SNS user(s). The database stores friend lists for respective SNS users.

The displaying module 340 is configured to display the personal activity information, the geographic location information and the first SNS user identification number of the first SNS user in a friend activity list of the second SNS user, for the second SNS user to check. If the friend list of the SNS user A in the database in the SNS server contains a SNS user B and a SNS user X, and Xiangshan travel notes submitted by the SNS user A at Beijing, including specifically the personal activity information submitted by the SNS user A as the detailed content of the travel notes, the geographic location as Beijing, and the SNS user A's ID as "1234", would be displayed in friend activity lists of the SNS user B and the SNS user X who are both friends of the SNS user A. Table 3 is a detailed record of the friend activity list of the SNS user X who is a friend of the SNS user A. In the Table 3, the friends of the SNS user X include the SNS user A, the SNS user B, a SNS user E, and a SNS user N, etc. The SNS user E submits personal activity information 1 at a geographic location x, the user B submits an information 2 at a geographic location b, the user N submits an information 4 at a geographic location b, and the user A submits an information n at a geographic location b. Moreover, the information obtaining module 310, the establishing module 320 and the notifying module 330 are modules running on the SNS server, and the displaying module 340 is a module running on the terminal.

In one embodiment, as shown in FIG. 4, in addition to the information obtaining module 310, the establishing module 320, the notifying module 330 and the displaying module 340, the system for displaying user activities based on geographic location information further includes a searching module 350, a screening module 360 and a setting module 370.

The searching module 350 is configured to obtain geographic location information of the displayed friend activity list, which information is selected by the second SNS user. The screening module 360 is configured to screen the friend activity list of the second SNS user for respective friends' personal activity information corresponding to the geographic location information. The displaying module 340 is further configured to list and display user identification numbers of the respective friends of the second SNS user and the personal activity information thereof in accordance with the geographic location information. After the searching module 350 obtains the geographic location information selected by the second SNS user from the friend activity list, the screening module 360 picks up respective friends' personal activity information corresponding to the geographic location information from the friend activity list of the second SNS user. If the second SNS user is the SNS user X, the IDs of the friends, who submit the personal activity information at geographic location b, of the friends of the SNS user X, and the personal activity information thereof, are shown in Table 4, and the SNS user X's friends who submit information at the geographic location b are the SNS user A, the SNS user B, and the SNS user N.

In addition, the first SNS user and the second SNS user are friends of each other, the personal activity information of the first SNS user would be displayed in the friend activity list of the second SNS user, while the personal activity information of the second SNS user would also be displayed in the friend activity list of the first SNS user. Therefore, the above-described operations on the first SNS user and the second SNS user are interchangeable. The searching module 350 may also obtain the geographic location information selected by the first SNS user, the screening module 360 screens the friend activity list of the first SNS user for respective friends' personal activity information corresponding to the geographic location information in accordance with the geographic location information, and the displaying module 340 may be further configured to list and display the user IDs of the friends of the first SNS user and the personal activity information thereof according to the geographic location information.

The setting module 370 is configured to set a link address of the personal activity information of the first SNS user; the displaying module 340 is further configured to display the link address in the friend activity list of the second SNS user. The setting module 370 may set a link address of the personal activity information submitted by the SNS user A, and the link address is displayed by the displaying module 340 in the friend activity list of the SNS user B and the friend activity list of the SNS user X. After the searching module 350 determines that the SNS user B and the SNS user X trigger the link address, the displaying module 340 would extract the detailed content of the personal activity information from the personal activity information database of the SNS user A in the SNS server and check the content.

In the method and system for displaying user activities based on geographic location information, and the computer storage medium therefor, upon obtaining the personal activity information submitted by the first SNS user, the geographic location information of the first SNS user who submits the personal activity information is obtained at the same time, and the personal activity information, the geographic location information and the first SNS user identification number of the first SNS user are displayed in the friend activity list of the second SNS user, for the second SNS user to check the personal activities of friends at different locations.

The above described embodiments are only several implementations of the present invention, although explained with specific details, they would not be construed as limiting the scope of the present invention. It should be noted that, for one person ordinarily skilled in the art, various variations and modifications may be made without departing from the inventive concept of the present invention, which all are within the scope of the present invention. Therefore, the protection scope of the present invention should be in accordance with the scope of the following claims.

## Claims

1. A method for displaying user activities based on geographic location information, comprising steps of:
obtaining (S100), by a Social Networking Service, SNS, server, personal activity information submitted by a first SNS user and geographic location information of the first SNS user who submits the personal activity information, which comprises obtaining geographic coordinate information of a mobile communication terminal through which the personal activity information is submitted, obtaining the geographic location information of the first SNS user who submits the personal activity information based on the geographic coordinate information and a geographic information system, and matching the geographic coordinate information of the mobile communication terminal with geographic coordinates stored in the geographic information system, to obtain a geographic location corresponding to the geographic coordinate information of the mobile communication terminal, wherein the first SNS user submits the personal activity information at the same time as the geographic location information;
establishing (S200), by the SNS server, a personal activity information database of the first SNS user based on the personal activity information, the geographic location and a first SNS user identification number, and storing the database in the SNS server;
searching (S300), by the SNS server, the database for a friend list of the first SNS user, notifying the personal activity information, the geographic location and the first SNS user identification number of the first SNS user to any second SNS user on the friend list of the first SNS user, and displaying them, by the second SNS user, in a friend activity list of the second SNS user;
setting, by the SNS server, a link address of the personal activity information of the first SNS user; and
displaying, by the second SNS user, the link address in the friend activity list of the second SNS user, wherein the personal activity information is a title and the link address, and when the link address is triggered, by the second user, detailed content of the personal activity information is pulled from the personal activity information database of the first SNS user in the SNS server.

2. The method for displaying user activities based on the geographic location information according to claim 1, further including steps of:
obtaining, by the SNS server, geographic location information of the displayed friend activity list, which information is selected by the second SNS user; and screening, by the second SNS user, the friend activity list of the second SNS user, based on the geographic location information, for respective friends' personal activity information corresponding to the geographic location information, and listing and displaying, by the second SNS user, user identification numbers of the respective friends of the second SNS user and personal activity information thereof in accordance with the geographic location information.

3. A system for displaying user activities based on geographic location information, comprising:
an information obtaining module (310), at a SNS server, configured to obtain personal activity information submitted by a first Social Networking Service, SNS, user and geographic location information of the first SNS user who submits the personal activity information, wherein the information obtaining module (310) is further configured to obtain geographic coordinate information of a mobile communication terminal through which the personal activity information is submitted, obtain the geographic location information of the first SNS user who submits the personal activity information based on the geographic coordinate information and a geographic information system, and match the geographic coordinate information of the mobile communication terminal with geographic coordinates stored in the geographic information system, to obtain a geographic location corresponding to the geographic coordinate information of the mobile communication terminal, wherein the first SNS user submits the personal activity information at the same time as the geographic location information;
an establishing module (320), at the SNS server, configured to establish a personal activity information database of the first SNS user based on the personal activity information, geographic location and a first SNS user identification number;
a notifying module (330), at the SNS server, configured to search the database for a friend list of the first SNS user, notify the personal activity information, the geographic location and the first SNS user identification number of the first SNS user to any second SNS user on the friend list of the first SNS user;
a displaying module (340), at the second SNS user, configured to display the personal activity information, the geographic location information and the first SNS user identification number of the first SNS user in a friend activity list of the second SNS user; and
a setting module connected to the displaying module, at the SNS server, configured to set a link address of the personal activity information of the first SNS user, wherein
the displaying module (340) being further configured to display the link address in the friend activity list of the second SNS user, wherein the personal activity information is a title and the link address, and when the link address is triggered, by the second SNS user, detailed content of the personal activity information is pulled from the personal activity information database of the first SNS user in the SNS server.

4. The system for displaying user activities based on geographic location information according to claim 3, further including:
a searching module, at the SNS server, configured to obtain geographic location information of the displayed friend activity list, which information is selected by the second SNS user;
a screening module, at the second SNS user, configured to screen the friend activity list of the second SNS user for respective friends' personal activity information corresponding to the geographic location information; and
the displaying module being further configured to list and display user identification numbers of the respective friends of the second SNS user and personal activity information thereof in accordance with the geographic location information.

## Patentansprüche

1. Verfahren zum Anzeigen von Benutzeraktivitäten auf Basis von geografischen Standortinformationen, das die folgenden Schritte umfasst:
Erhalten (S100) von persönlichen Aktivitätsinformationen, die von einem ersten Benutzer eines sozialen Netzwerkdienstes, SNS, übergeben werden, und geografischen Standortinformationen des ersten SNS-Benutzers, der die persönlichen Aktivitätsinformationen übergibt, durch einen SNS-Server, was das Erhalten von geografischen Koordinateninformationen eines mobilen Kommunikationsendgeräts, über das die persönlichen Aktivitätsinformationen übergeben werden, das Erhalten der geografischen Standortinformationen des ersten SNS-Benutzers, der die persönlichen Aktivitätsinformationen auf Basis der geografischen Koordinateninformationen und einem geografischen Informationssystem übergibt, und das Abgleichen der geografischen Koordinateninformationen des mobilen Kommunikationsendgeräts mit geografischen Koordinaten, die im geografischen Informationssystem gespeichert sind, umfasst, um einen geografischen Standort zu erhalten, der den geografischen Koordinateninformationen des mobilen Kommunikationsendgeräts entspricht, wobei der erste SNS-Benutzer die persönlichen Aktivitätsinformationen zur selben Zeit wie die geografischen Standortinformationen übergibt;
Einrichten (S200) einer persönlichen Aktivitätsinformationsdatenbank des ersten SNS-Benutzers auf Basis der persönlichen Aktivitätsinformationen, des geografischen Standorts und einer ersten SNS-Benutzeridentifikationsnummer und Speichern der Datenbank im SNS-Server;
Durchsuchen (S300) der Datenbank nach einer Freundesliste des ersten SNS-Benutzers durch den SNS-Server, Mitteilen der persönlichen Aktivitätsinformationen, des geografischen Standorts und der ersten SNS-Benutzeridentifikationsnummer des ersten SNS-Benutzers einem zweiten SNS-Benutzer auf der Freundesliste des ersten SNS-Benutzers und Anzeigen derselben durch den zweiten SNS-Benutzer in einer Freundesaktivitätsliste des zweiten SNS-Benutzers;
Einstellen einer Linkadresse der persönlichen Aktivitätsinformationen des ersten SNS-Benutzers durch den SNS-Server und
Anzeigen der Linkadresse in der Freundesaktivitätsliste des zweiten SNS-Benutzers durch den zweiten SNS-Benutzer, wobei die persönlichen Aktivitätsinformationen ein Titel und die Linkadresse sind und, wenn die Linkadresse vom zweiten Benutzer ausgelöst wird, ein detaillierter Inhalt der persönlichen Aktivitätsinformationen aus der persönlichen Aktivitätsinformationsdatenbank des ersten SNS-Benutzers in den SNS-Server gezogen wird.

2. Verfahren zum Anzeigen von Benutzeraktivitäten auf Basis der geografischen Standortinformationen nach Anspruch 1, das ferner die folgenden Schritte umfasst:
Erhalten von geografischen Standortinformationen der angezeigten Freundesaktivitätsliste durch den SNS-Server, wobei die Informationen vom zweiten SNS-Benutzer ausgewählt werden; und
Überprüfen der Freundesaktivitätsliste des zweiten SNS-Benutzers durch den zweiten SNS Benutzer auf Basis der geografischen Standortinformationen auf persönliche Aktivitätsinformationen von jeweiligen Freunden, die den geografischen Standortinformationen entsprechen, und Auflisten und Anzeigen der Benutzeridentifikationsnummern der jeweiligen Freunde des zweiten SNS-Benutzers und von persönlichen Aktivitätsinformationen davon gemäß den geografischen Standortinformationen.

3. System zum Anzeigen von Benutzeraktivitäten auf Basis von geografischen Standortinformationen, das Folgendes umfasst:
ein Informationserhaltungsmodul (310) an einem SNS-Server, das dazu ausgelegt ist, persönliche Aktivitätsinformationen, die von einem ersten Benutzer eines sozialen Netzwerkdienstes, SNS übergeben werden, und geografische Standortinformationen des ersten SNS-Benutzers, der die persönlichen Aktivitätsinformationen übergibt, zu erhalten, wobei das Informationserhaltungsmodul (310) ferner dazu ausgelegt ist, geografische Koordinateninformationen eines mobilen Kommunikationsendgeräts zu erhalten, über das die persönlichen Aktivitätsinformationen übergeben werden, geografische Standortinformationen des ersten SNS-Benutzers zu erhalten, der die persönlichen Aktivitätsinformationen auf Basis der geografischen Koordinateninformationen und einem geografischen Informationssystem übergibt, und die geografischen Koordinateninformationen des mobilen Kommunikationsendgeräts mit geografischen Koordinaten, die im geografischen Informationssystem gespeichert sind, abzugleichen, um einen geografischen Standort zu erhalten, der den geografischen Koordinateninformationen des mobilen Kommunikationsendgeräts entspricht, wobei der erste SNS-Benutzer die persönlichen Aktivitätsinformationen zur selben Zeit wie die geografischen Standortinformationen übergibt;
ein Einrichtungsmodul (320) am SNS-Server, das dazu ausgelegt ist, eine persönliche Aktivitätsinformationsdatenbank des ersten SNS-Benutzers auf Basis der persönlichen Aktivitätsinformationen, des geografischen Standorts und einer ersten SNS-Benutzeridentifikationsnummer einzurichten und die Datenbank im SNS-Server zu speichern;
ein Mitteilungsmodul (330) am SNS-Server, das dazu ausgelegt ist, die Datenbank nach einer Freundesliste des ersten SNS-Benutzers zu durchsuchen, einem zweiten SNS-Benutzer auf der Freundesliste des ersten SNS-Benutzers die persönliche Aktivitätsinformationen, den geografischen Standort und die erste SNS-Benutzeridentifikationsnummer des ersten SNS-Benutzers mitzuteilen;
ein Anzeigemodul (340) beim zweiten SNS-Benutzer, das dazu ausgelegt ist, die persönlichen Aktivitätsinformationen, die geografischen Standortinformationen und die erste SNS-Benutzeridentifikationsnummer des ersten SNS-Benutzers in einer Freundesaktivitätsliste des zweiten SNS-Benutzers anzuzeigen; und
ein Einstellungsmodul, das mit dem Anzeigemodul verbunden ist, am SNS-Server, das dazu ausgelegt ist, eine Linkadresse der persönlichen Aktivitätsinformationen des ersten SNS-Benutzers einzustellen, wobei
das Anzeigemodul (340) ferner dazu ausgelegt ist, die Linkadresse in der Freundesaktivitätsliste des zweiten SNS-Benutzers anzuzeigen, wobei die persönlichen Aktivitätsinformationen ein Titel und die Linkadresse sind und, wenn die Linkadresse vom zweiten SNS-Benutzer ausgelöst wird, ein detaillierter Inhalt der persönlichen Aktivitätsinformationen aus der persönlichen Aktivitätsinformationsdatenbank des ersten SNS-Benutzers in den SNS-Server gezogen wird.

4. System zum Anzeigen von Benutzeraktivitäten auf Basis der geografischen Standortinformationen nach Anspruch 3, das ferner Folgendes beinhaltet:
ein Durchsuchungsmodul am SNS-Server, das dazu ausgelegt ist, geografische Standortinformationen der angezeigten Freundesaktivitätsliste zu durchsuchen, wobei die Informationen vom zweiten SNS-Benutzer ausgewählt werden;
ein Überprüfungsmodul beim zweiten SNS-Benutzer, das dazu ausgelegt ist, die Freundesaktivitätsliste des zweiten SNS-Benutzers auf persönlicher Aktivitätsinformationen von jeweiligen Freunden zu überprüfen, die den geografischen Standortinformationen entsprechen; und
wobei das Anzeigemodul ferner dazu ausgelegt ist, Benutzeridentifikationsnummern der jeweiligen Freunde des zweiten SNS-Benutzers und persönliche Aktivitätsinformationen davon gemäß den geografischen Standortinformationen aufzulisten und anzuzeigen.

## Revendications

1. Procédé pour afficher des activités d'utilisateur sur la base d'informations de géolocalisation, comprenant les étapes suivantes :
obtenir (S100), par un serveur de service de réseautage social, SNS, des informations d'activités personnelles soumises par un premier utilisateur SNS, et des informations de géolocalisation du premier utilisateur SNS qui soumet les informations d'activités personnelles, ce qui comprend l'obtention d'informations de coordonnées géographiques d'un terminal de communication mobile par lequel les informations d'activités personnelles sont soumises, obtenir les informations de géolocalisation du premier utilisateur SNS qui soumet les informations d'activités personnelles sur la base des informations de coordonnées géographiques et d'un système d'informations géographiques, et apparier les informations de coordonnées géographiques du terminal de communication mobile avec des coordonnées géographiques stockées dans le système d'informations géographiques pour obtenir une géolocalisation correspondant aux informations de coordonnées géographiques du terminal de communication mobile, dans lequel le premier utilisateur SNS soumet les informations d'activités personnelles en même temps que les informations de géolocalisation ;
établir (S200), par le serveur SRS, une base de données d'informations d'activités personnelles du premier utilisateur SNS sur la base des informations d'activités personnelles, de la géolocalisation et d'un numéro d'identification de premier utilisateur SRS, et stocker la base de données dans le serveur SRS ;
rechercher (S300), par le serveur SRS, une liste d'amis du premier utilisateur SNS dans la base de données, notifier les informations d'activités personnelles, la géolocalisation et le numéro d'identification de premier utilisateur SRS du premier utilisateur SNS à tout deuxième utilisateur SNS sur la liste d'amis du premier utilisateur SNS, et les afficher, par le deuxième utilisateur SNS, dans une liste d'activités d'amis du deuxième utilisateur SNS ;
définir, par le serveur SRS, une adresse de lien des informations d'activités personnelles du premier utilisateur SNS ; et
afficher, par le deuxième utilisateur SNS, l'adresse de lien dans la liste d'activités d'amis du deuxième utilisateur SNS, dans lequel les informations d'activités personnelles sont un titre et l'adresse de lien, et lorsque l'adresse de lien est déclenchée par le deuxième utilisateur, un contenu détaillé des informations d'activités personnelles est extrait de la base de données d'informations d'activités personnelles du premier utilisateur SNS dans le serveur SRS.

2. Procédé pour afficher des activités d'utilisateur sur la base des informations de géolocalisation selon la revendication 1, comprenant en outre des étapes suivantes :
obtenir, par le serveur SRS, des informations de géolocalisation de la liste d'activités d'amis affichée, lesquelles informations sont sélectionnées par le deuxième utilisateur SNS ; et
sur la base des informations de géolocalisation, dépister, par le deuxième utilisateur SNS, des informations d'activités personnelles des amis respectifs correspondant aux informations de géolocalisation dans la liste d'activités d'amis du deuxième utilisateur SNS, et écouter et afficher, par le deuxième utilisateur SNS, des numéros d'identification d'utilisateur des amis respectifs du deuxième utilisateur SNS et des informations d'activités personnelles de ces derniers conformément aux informations de géolocalisation.

3. Système pour afficher des activités d'utilisateur sur la base d'informations de géolocalisation, comprenant :
un module d'obtention d'informations (310) au niveau d'un serveur SNS, configuré pour obtenir des informations d'activités personnelles soumises par un premier utilisateur de service de réseautage social, SNS, et des informations de géolocalisation du premier utilisateur SNS qui soumet les informations d'activités personnelles, dans lequel le module d'obtention d'informations (310) est configuré en outre pour obtenir des informations de coordonnées géographiques d'un terminal de communication mobile par lequel les informations d'activités personnelles sont soumises, obtenir les informations de géolocalisation du premier utilisateur SNS qui soumet les informations d'activités personnelles sur la base des informations de coordonnées géographiques et d'un système d'informations géographiques, et apparier les informations de coordonnées géographiques du terminal de communication mobile avec des coordonnées géographiques stockées dans le système d'informations géographiques pour obtenir une géolocalisation correspondant aux informations de coordonnées géographiques du terminal de communication mobile, dans lequel le premier utilisateur SNS soumet les informations d'activités personnelles en même temps que les informations de géolocalisation ;
un module d'établissement (320) au niveau du serveur SRS, configuré pour établir une base de données d'informations d'activités personnelles du premier utilisateur SNS sur la base des informations d'activités personnelles, de la géolocalisation et d'un numéro d'identification de premier utilisateur SRS ;
un module de notification (330) au niveau du serveur SRS, configuré pour rechercher une liste d'amis du premier utilisateur SNS dans la base de données, notifier les informations d'activités personnelles, la géolocalisation et le numéro d'identification de premier utilisateur SRS du premier utilisateur SNS à tout deuxième utilisateur SNS sur la liste d'amis du premier utilisateur SNS ;
un module d'affichage (340) au niveau du deuxième utilisateur SNS, configuré pour afficher les informations d'activités personnelles, les informations de géolocalisation et le numéro d'identification de premier utilisateur SRS du premier utilisateur SNS dans une liste d'activités d'amis du deuxième utilisateur SNS ; et
un module de définition connecté au module d'affichage, au niveau du serveur SRS, configuré pour définir une adresse de lien des informations d'activités personnelles du premier utilisateur SNS, dans lequel
le module d'affichage (340) est en outre configuré pour afficher l'adresse de lien dans la liste d'activités d'amis du deuxième utilisateur SNS, dans lequel les informations d'activités personnelles sont un titre et l'adresse de lien, et lorsque l'adresse de lien est déclenchée par le deuxième utilisateur SNS, un contenu détaillé des informations d'activités personnelles est extrait de la base de données d'informations d'activités personnelles du premier utilisateur SNS dans le serveur SRS.

4. Système pour afficher des activités d'utilisateur sur la base d'informations de géolocalisation selon la revendication 3, comportant en outre :
un module de recherche au niveau du serveur SRS, configuré pour obtenir des informations de géolocalisation de la liste d'activités d'amis affichée, lesquelles informations sont sélectionnées par le deuxième utilisateur SNS ;
un module de dépistage au niveau du deuxième utilisateur SNS configuré pour dépister des informations d'activités personnelles des amis respectifs correspondant aux informations de géolocalisation dans la liste d'activités d'amis du deuxième utilisateur SNS ; et
le module d'affichage est en outre configuré pour lister et afficher des numéros d'identification d'utilisateur des amis respectifs du deuxième utilisateur SNS et des informations d'activités personnelles de ces derniers conformément aux informations de géolocalisation.
